# EUROPÄISCHE PATENTSCHRIFT

(11) **EP 0 600 320 B1**
(45) Veröffentlichungstag und Bekanntmachung des Hinweises auf die Patenterteilung: **05.03.1997**
(21) Anmeldenummer: 93118620.9
(22) Anmeldetag: 19.11.1993
(51) Int. Cl.: B65H 51/14, B65G 23/44

(54) **Abzugsvorrichtung für langgestrecktes Gut**
Pulling device for elongate material
Dispositif de tirage pour matériaux allongés

(30) Priorität: 03.12.1992 DE 4240654
(43) Veröffentlichungstag der Anmeldung: 08.06.1994
(73) Patentinhaber: kabelmetal electro GmbH, 30179 Hannover (DE)
(72) Erfinder: Staschewski, Harry, D-30853 Langenhagen (DE)

(56) Entgegenhaltungen:
- EP-A- 0 112 464
- GB-A- 908 769

## Beschreibung

Die Erfindung geht aus von einer Abzugsvorrichtung für langgestrecktes Gut, insbesondere für Kabel oder Rohre, die ein Abzugsgehäuse, zumindest in etwa parallel zueinander verlaufende, antreibbare endlose Rollenketten, eine Mehrzahl von Spannzangen, die an den Rollenketten montiert sind und mit denen das langgestreckte Gut umgreifbar ist, jeweils ein ortsfestes Antriebskettenrad und ein dem Antriebskettenrad abgewandt und in Längsrichtung der Rollenkette gegenüberliegend angeordnetes Spannkettenrad für jede Rollenkette aufweist, wobei die Spannkettenräder in Lagergehäusen gelagert und gemeinsam mit diesen Lagergehäusen gegenüber dem jeweiligen Antriebskettenrad in Längsrichtung der Rollenketten verschiebbar sind.

Eine solche Abzugsvorrichtung für langgestrecktes Gut, beispielsweise für geschweißte Rohre, ist in der Druckschrift "Uniwema-Maschinen und Zubehör" der Firma kabelmetal electro GmbH aus dem Februar 1992 beschrieben. Bei dieser bekannten Abzugsvorrichtung müssen die Rollenketten, an denen die Spannzangen montiert sind, aufgrund des im Betrieb auftretenden Verschleißes manuell, also von Hand nachgespannt werden. Erfolgt dieses Nachspannen im Betrieb nicht rechtzeitig, so liegen die Rollenketten zu lose auf den Kettenrädern auf und der Verschleiß der Rollenketten und der Kettenräder erhöht sich. Wird beim Ziehen eines langgestreckten Gutes z. B. durch eine Wellmantelmaschine eine das langgestreckte Gut umgreifende Spannzange geöffnet, so muß die in Antriebsrichtung der Rollenketten auf diese Spannzange folgende Spannzange einen größeren Anteil an der erforderlichen Durchzugskraft des langgestreckten Gutes übernehmen. Sind die Rollenketten nicht ausreichend gespannt, so werden sie in diesem Betriebsfall durch die plötzlich auftretenden erhöhten Zugkräfte ruckartig in Längsrichtung der Rollenketten dem jeweiligen Antriebskettenrad zugewandt gespannt. Diese Geschwindigkeitsveränderungen des abgezogenen langgestreckten Gutes können bei Verwendung einer solchen bekannten Abzugsvorrichtung beispielsweise in einer Universal-Wellmantelmaschine nach der oben genannten Druckschrift unter Umständen zu Herstellungsfehlern wie z. B. Schweißfehlern an dem langgestreckten Gut führen. Zudem besteht bei dem manuellen Nachspannen der Rollenketten die Gefahr einer Überbeanspruchung der Rollenketten.

Die GB-A-908 769 betrifft ebenfalls eine Abzugsvorrichtung für langgestrecktes Gut wie Kabel. Diese Abzugsvorrichtung weist zwei mit weichen Polstern aus Gummi oder einem ähnlichen Werkstoff versehene Ketten auf. Zum Regulieren der Spannung jeder Kette ist eine Feder vorgesehen, die sich an dem Gehäuse der Abzugsvorrichtung abstützt und die bestrebt ist, mittels eines U-förmigen Bauteils ein verschiebbares Spannkettenrad in dem zugehörigen Antriebskettenrad abgewandter Richtung zu ziehen.

In der EP-A-0 112 464 ist eine Spannvorrichtung für Kratzböden oder ähnliche Transportböden an landwirtschaftlichen Fahrzeugen und Maschinen beschrieben. Um die Kratzerketten gespannt zu halten, ist eine auf die Umlenkräder wirkende Spannvorrichtung vorgesehen. Eine Zugfeder dient zur Erzeugung einer Spannkraft, die auf zwei keilförmige Vorschubdruckorgane übertragen wird, die ihrerseits auf die verschiebbaren Umlenkräder wirken.

Der in dem Patentanspruch 1 angegebenen Erfindung liegt das Problem zugrunde, eine Abzugsvorrichtung für langgestrecktes Gut mit einer automatischen Nachspannung für die antreibbaren endlosen Rollenketten zu versehen, bei der keine unerwünschten Bewegungen der Spannkettenräder auftreten.

Dieses Problem wird durch die in dem Patentanspruch 1 aufgeführten Merkmale, eine gattungsgemäße Abzugsvorrichtung derart auszubilden, daß wenigstens ein federndes Spannelement über parallel zueinander geführte Druckbolzen in den Antriebskettenrädern abgewandter Richtung eine Spannkraft auf die verschiebbaren Spannkettenräder ausübt und daß jedem Spannkettenrad ein selbsthemmender Keil zugeordnet ist, der durch ein Zugelement in einen in Längsrichtung der Rollenketten dem Antriebskettenrad zugewandt zwischen dem jeweiligen Spannkettenrad mit seinem Lagergehäuse und einer ortsfesten, dem Spannkettenrad zugewandten Keilführung gebildeten Spalt hineingezogen wird, gelöst.

Die mit der Erfindung erzielten Vorteile bestehen insbesondere darin, daß die Rollenketten automatisch nachgespannt werden und eine unerwünschte Bewegung wie z. B. ein Hin- und Herschwingen der verschiebbaren Lagergehäuse bei kurzzeitig erhöhten Zugkräften der Rollenketten vermieden wird. Das automatische Nachspannen der Rollenketten führt zu einem verringerten Verschleiß der Rollenketten und der Kettenräder und vermeidet unerwünschte Geschwindigkeitsveränderungen des abgezogenen langgestreckten Gutes durch im Betrieb auftretende Änderungen der Zugkraft der Rollenketten. Eine solche erfindungsgemäße Abzugsvorrichtung ist zudem auf einfache Art und Weise herstellbar.

Durch die in den Unteransprüchen aufgeführten Maßnahmen sind vorteilhafte Weiterbildungen und Verbesserungen der Erfindung möglich.

Für einen besonders einfachen Aufbau der erfindungsgemäßen Abzugsvorrichtung ist es von Vorteil, wenn die Lagergehäuse der Spannkettenräder in Kulissenführungen des Abzugsgehäuses in Längsrichtung der Rollenketten verschiebbar geführt sind.

Vorteilhaft ist es, wenn die Spannkraft des wenigstens einen Spannelementes einstellbar ist. Auf diese Weise läßt sich eine zu große oder zu kleine Spannung der Rollenketten vermeiden.

Um einen zuverlässigen Hinweis auf eine unzulässige Kettenlängung zu erhalten, ist es vorteilhaft, wenn zumindest ein mit einem Lagergehäuse eines Spannkettenrades zusammenwirkender Näherungsschalter vorgesehen ist.

Für einen möglichst einfachen Aufbau der erfindungsgemäßen Abzugsvorrichtung ist es von Vorteil, wenn das wenigstens eine Spannelement als Druckfeder und die auf die Keile wirkenden Zugelemente als Zugfedern ausgebildet sind.

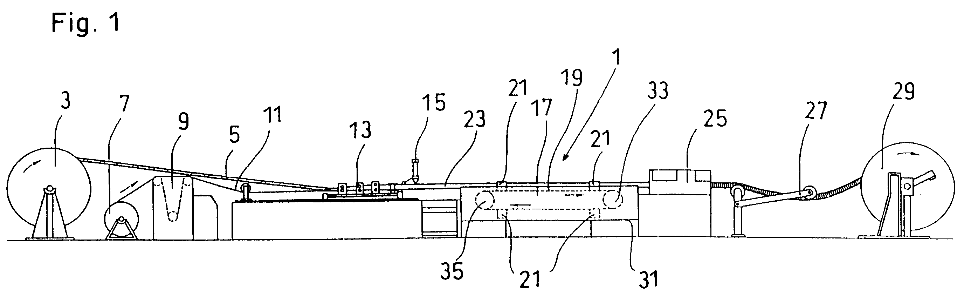

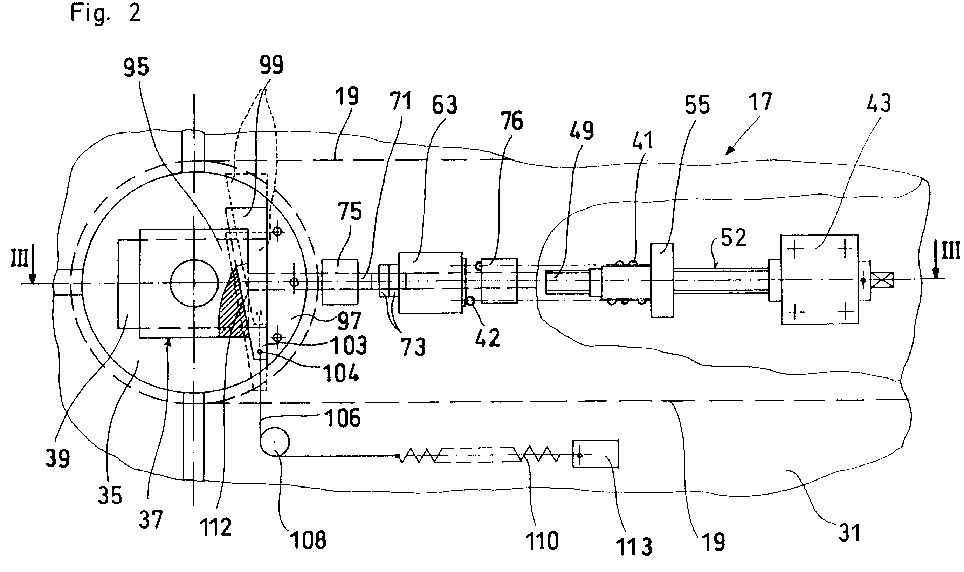

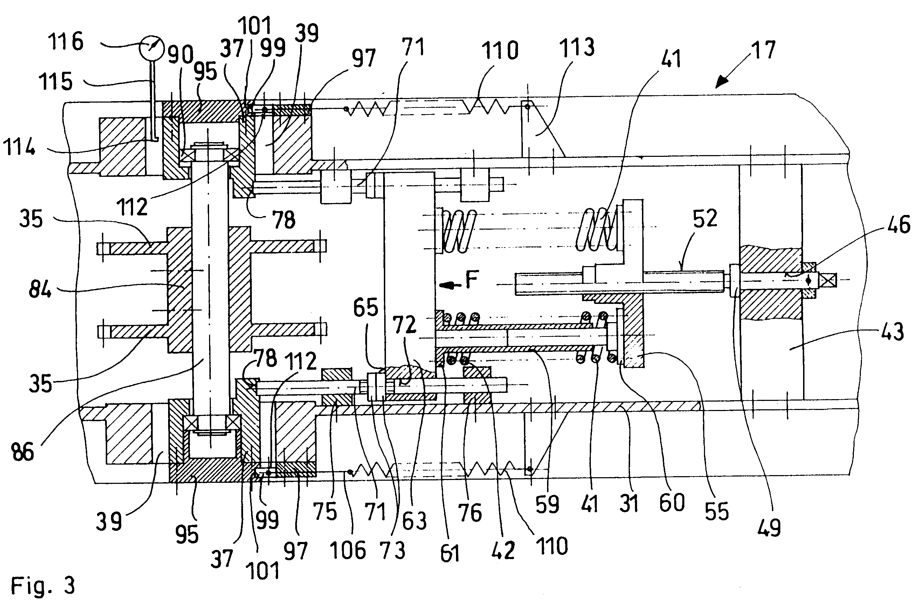

Ein Ausführungsbeispiel der Erfindung ist in der Zeichnung vereinfacht dargestellt und in der nachfolgenden Beschreibung näher erläutert. Es zeigen Fig. 1 eine Wellmantelmaschine mit einer erfindungsgemäßen Abzugsvorrichtung gemäß des Ausführungsbeispieles, Fig. 2 einen Ausschnitt der erfindungsgemäßen Abzugsvorrichtung gemäß des Ausführungsbeispieles und Fig. 3 einen Schnitt entlang der Linie III-III in Fig. 2.

In der Fig. 1 ist beispielsweise eine Wellmantelmaschine 1 zur Herstellung von Kabelmänteln aus einem Metallband dargestellt. Die Wellmantelmaschine 1 weist z. B. einen Abwickler 3 für eine Kabelseele 5 sowie einen Bandablaufbock 7 und ein Bandreinigungsgerät 9 für ein Metallband 11 auf. Mit einem Formwerkzeug 13 wird das Metallband 11 um die Kabelseele 5 herumgeformt und an seinen Längskanten mittels einer Schweißvorrichtung 15 zu einem die Kabelseele 5 umgebenden Rohr verschweißt. An die Schweißvorrichtung 15 schließt sich eine erfindungsgemäß ausgebildete Abzugsvorrichtung 17 an, die das geschweißte Rohr und damit die Kabelseele 5 und das um diese herumgeformte Metallband 11 mit gleichbleibender Geschwindigkeit durch die Wellmantelmaschine 1 zieht. Zu diesem Zweck weist die Abzugsvorrichtung 17 eine Mehrzahl von an beispielsweise zwei Rollenketten 19 montierten Spannzangen 21 auf, mit denen ein langgestrecktes Gut 23, beispielsweise die von einem zu einem Rohr geformten Metallband 11 umgebene Kabelseele 5, fest umgreifbar ist. Der Anpreßdruck der Spannzangen 21 ist einstellbar, so daß Abdrücke der Spannzangen 21 an dem langgestreckten Gut 23 vermieden werden. Die Spannzangen 21 nehmen außerdem die Torsionskräfte auf, die beim anschließenden Wellvorgang mittels einer Wellvorrichtung 25 auf das langgestreckte Gut 23 ausgeübt werden.

Die erfindungsgemäße Abzugsvorrichtung 17 hat ein z. B. langgestrecktes Abzugsgehäuse 31, in dem zumindest zwei, in dem dargestellten Ausführungsbeispiel genau zwei in etwa parallel zueinander verlaufende, antreibbare endlose Rollenketten 19 angeordnet sind. Die Spannzangen 21 sind mit ihren einen Spannzangenhälften an der einen und mit ihren anderen Spannzangenhälften an der anderen Rollenkette 19 fest montiert. Durch eine spezielle Führung der zweiteiligen Spannzangen 21 in dem Abzugsgehäuse 31 wird erreicht, daß die in dem Abzugsgehäuse umlaufenden Spannzangen 21 zum Transport des langgestreckten Gutes 23 durch die Wellmantelmaschine 1 das langgestreckte Gut im richtigen Moment fest umgreifen und sich von dem langgestreckten Gut 23 im richtigen Moment auch wieder lösen.

Die parallel zueinander verlaufenden endlosen Rollenketten 19 werden durch jeweils ein ortsfestes Antriebskettenrad 33 angetrieben und laufen über je ein Spannkettenrad 35, wobei die Spannkettenräder 35 in dem Abzugsgehäuse 31 an dem den Abtriebskettenrädern 33 abgewandten Ende den Antriebskettenrädern gegenüberliegend angeordnet sind. Die beiden Spannkettenräder 35 sind, wie die Fig. 3 zeigt, beispielsweise Teil eines Spannrades 84, das auf eine Spannkettenradachse 86 aufgeschoben und mit dieser fest verbunden ist. Die Spannkettenradachse 86 ist ihrerseits in in dem Abzugsgehäuse 31 angeordneten Lagergehäusen 37 mittels Gleit- oder Wälzlagern 90 drehbar gelagert. Um eine Verschiebbarkeit der in den Lagergehäusen 37 gelagerten Spannkettenräder 35 bzw. des Spannrades 84 gegenüber den Antriebskettenrädern 33 zu ermöglichen, ist in dem Abzugsgehäuse 31 für jedes Lagergehäuse 37 eine langlochförmige Kulissenführung 39 vorgesehen, in der ein Lagergehäuse 37 eines Spannkettenrades 35 in Längsrichtung der Rollenketten 19 verschiebbar geführt ist.

Die erfindungsgemäße Abzugsvorrichtung 17 weist wenigstens ein auf die Lagergehäuse 37 wirkendes Spannelement 41, bei dem in den Fig. dargestellten Ausführungsbeispiel beispielsweise zwei auf die beiden Lagergehäuse 37 wirkende, parallel zueinander angeordnete Spannelemente 41 auf. Die Spannelemente 41 sind beispielsweise als Druckfedern ausgebildet, sie können aber auch als Zugfedern, als hydraulische Elemente oder als pneumatische Elemente ausgebildet sein. Die beiden Spannelemente 41 üben eine in den Antriebskettenrädern 33 abgewandter Richtung wirkende Spannkraft F auf die beiden in den Kulissenführungen 39 verschiebbaren Lagergehäuse 37 der Spannkettenräder 35 aus, die bestrebt ist, die beiden Rollenketten 19 in gespanntem Zustand zu halten.

In dem Abzugsgehäuse 31 ist z. B. ein Stützelement 43 montiert und mit dem Abzugsgehäuse 31 fest verbunden. In einer Bohrung 46 des Stützelementes 43 ist eine Einstellschraube 49 an ihrem einen Ende geführt. Dem Stützelement 43 abgewandt hat die Einstellschraube 49 einen Gewindeabschnitt 52, mit dem die Einstellschraube 49 in eine verschiebbare Stützbrücke 55 eingeschraubt ist. Durch ein Verdrehen der Einstellschraube 49 ist die Lage der Stützbrücke 55 gegenüber dem Stützelement 43 und auf diese Weise auch die Vorspannung der beispielsweise als Druckfedern ausgebildeten Spannelemente 41 einstellbar. Bei der Auslegung und der Einstellung der Vorspannung der Spannelemente 41 ist die maximal zulässige Zugbelastung der Rollenketten 19 zu beachten.

Die beispielsweise als Druckfedern ausgebildeten Spannelemente 41 sind um z. B. teleskopförmige Federdorne 59 angeordnet und stützen sich über erste Federteller 60 der Federdorne 59 an der Stützbrücke 55 und über zweite Federteller 61 der Federdorne 59 mit ihren den Lagergehäusen 37 der Spannkettenräder 35 zugewandten Enden 42 an einer Übertragungsbrücke 63 ab. Die Übertragungsbrücke 63 stützt sich ihrerseits über eine den Lagergehäusen 37 zugewandte Anlagestirnseite 65 an Stützmuttern 73 von zwei jeweils einem Lagergehäuse 37 zugeordneten Druckbolzen 71 ab.

Die Druckbolzen 71 durchragen jeweils eine Durchgangsbohrung 72 der Übertragungsbrücke 63 und sind durch Führungsböcke 75, 76 parallel zueinander in Längsrichtung des Abzugsgehäuses 31 geführt. Die Führungsböcke 75 sind auf der den Lagergehäusen 37 zugewandten Seite der Übertragungsbrücke 63 und die Führungsböcke 76 auf der den Lagergehäusen 37 abgewandten Seite der Übertragungsbrücke 63 angeordnet und mit dem Abzugsgehäuse 31 fest verbunden. Mit ihren dem Stützelement 43 abgewandten Stirnseiten 78 liegen die Druckbolzen 71 an den in den Kulissenführungen 39 des Abzugsgehäuses 31 verschiebbar angeordneten Lagergehäusen 37 der Spannkettenräder 35 an. Die Spannelemente 41 sind bestrebt, über die Übertragungsbrücke 63 und die Druckbolzen 71 die Lagergehäuse 37 der Spannkettenradachse 86 und damit die Spannkettenräder 35 in den Antriebskettenrädern 33 abgewandter Richtung zu bewegen.

An dem Abzugsgehäuse 31 ist den Lagerdeckeln 95 der Lagergehäuse 37 benachbart und diesen auf der den Antriebskettenrädern 33 und dem Stützelement 43 zugewandten Seite gegenüberliegend jeweils ein ortsfestes Keilführungselement 97 fest montiert. Zwischen dem Lagerdeckel 95 und dem zugeordneten Keilführungselement 97 ist jeweils ein verschiebbarer Keil 99 angeordnet, der sich in seiner Zugrichtung, z. B. nach unten hin verjüngt. Zur Führung des Keils 99 dient eine z. B. in dem Lagerdeckel 95 ausgebildete Führungsnut 101, die beispielsweise ebenso wie der Keil 99 in Zugrichtung des Keils schräg geneigt ausgebildet ist. Der Spalt zwischen dem Boden der Führungsnut 101 des Lagerdeckels 95 und dem Keilführungselement 97, der sich entsprechend der Führungsnut 101 in Zugrichtung des Keils verjüngt, ist als Spalt 112 bezeichnet.

An einem verjüngten Ende 103 weist der Keil 99 eine Bohrung 104 auf, durch die ein Ende eines Drahtes 106 hindurchgeführt und der Draht 106 mit dem Keil 99 verbunden ist. An dem Abzugsgehäuse 31 ist z. B. jeweils eine einem Keil 99 zugeordnete drehbare Umlenkrolle 108 befestigt, die zur Umlenkung des Drahtes 106 beispielsweise um 90° dient. Mit seinem anderen Ende ist der Draht 106 mit einem Ende eines Zugelementes 110 verbunden. Das andere Ende des Zugelementes 110 ist z. B. an einem an dem Abzugsgehäuse 31 vorgesehenen Haltearm 13 befestigt. Als Zugelement 110 ist beispielsweise eine Zugfeder verwendet, es ist aber ebenfalls möglich, andere bekannte Spannelemente zur Zugbelastung des Keils 99 vorzusehen. Das Zugelement 110 ist bestrebt, über den Draht 106 den Keil 99 in den zwischen dem Lagerdeckel 95 und dem Keilführungselement 97 gebildeten Spalt 112 hineinzuziehen und durch die Selbsthemmung des Keils 99 eine unerwünschte Bewegung des Lagergehäuses 37 gegenüber dem Abzugsgehäuse 31 wie z. B. ein Hin- und Herschwingen zu verhindern. Wie durch die beiden in der Fig. 2 gestrichelt angedeuteten Keile 99 veranschaulicht, kann der Keil 99 in dem Spalt 112 in Abhängigkeit von der Lage des jeweiligen Lagergehäuses 37 der Spannkettenradachse 86 verschiedene Positionen einnehmen, wobei sich der Keil 99 bei zunehmender Längung der jeweiligen Rollenkette 19 in Zugrichtung des Zugelementes 110 verschiebt.

In zumindest einer der beiden Kulissenführungen 39 für die Lagergehäuse 37 des erfindungsgemäßen Ausführungsbeispieles ist ein Näherungsschalter 114 vorgesehen, der beispielsweise über eine Leitung 115 mit einer Anzeigevorrichtung 116 in Verbindung steht. Die Anzeigevorrichtung 116 gibt an, ob sich das in der Kulissenführung 39 geführte Lagergehäuse 37 der Spannkettenradachse 86 in unzulässiger Weise dem Näherungsschalter 114 genähert hat, weil die zulässige Kettenlängung der betreffenden Rollenkette 19 durch ihren Verschleiß überschritten ist und die Rollenkette 19 ausgewechselt werden muß.

Bei der erfindungsgemäßen Abzugsvorrichtung 17 mit den durch Spannelemente 41 automatisch nachgespannten Rollenketten 19, an denen die Spannzangen 21 montiert sind, mit denen ein langgestrecktes Gut 23 umgreifbar ist, ist nicht nur den Verschleiß an den Rollenketten 19 und an den Antriebskettenrädern 33 sowie den Spannkettenrädern 35 verringert, sondern zudem wird durch die gleichmäßig gespannten Rollenketten 19 ein Transport des langgestreckten Gutes 23 mit gleichbleibender Geschwindigkeit durch eine Fertigungsanlage, wie z. B. eine Wellmantelmaschine, gewährleistet. Die selbsthemmenden Keile 99 verhindern zuverlässig eine hin- und herschwingende Bewegung der in den Kulissenführungen 39 geführten Lagergehäuse 37 der Spannkettenradachse 86 der Spannkettenräder 35.

## Patentansprüche

1. Abzugsvorrichtung für langgestrecktes Gut (23), insbesondere für Kabel oder Rohre, mit einem Abzugsgehäuse (31), zumindest zwei in etwa parallel zueinander verlaufenden, antreibbaren endlosen Rollenketten (19), einer Mehrzahl von Spannzangen (21), die an den Rollenketten (19) montiert sind und mit denen das langgestreckte Gut umgreifbar ist, jeweils einem einer Rollenkette zugeordneten ortsfesten Antriebskettenrad (33) und einem dem Antriebskettenrad abgewandt und in Längsrichtung der Rollenkette gegenüberliegend angeordneten Spannkettenrad (35), wobei die Spannkettenräder (35) in Lagergehäusen (37) gelagert und gemeinsam mit diesen Lagergehäusen (37) gegenüber dem jeweiligen Antriebskettenrad (33) in Längsrichtung der Rollenketten (19) verschiebbar sind, dadurch gekennzeichnet, daß wenigstens ein federndes Spannelement (41) über Parallel zueinander geführte Druckbolzen (71) in den Antriebskettenrädern (33) abgewandter Richtung eine Spannkraft auf die verschiebbaren Spannkettenräder (35) ausübt und daß jedem Spannkettenrad (35) ein selbsthemmender Keil (99) zugeordnet ist, der durch ein Zugelement (110) in einen in Längsrichtung der Rollenketten (19) dem Antriebskettenrad zugewandt zwischen dem jeweiligen Spannkettenrad (35) mit seinem Lagergehäuse (37) und einer ortsfesten, dem Spannkettenrad (35) zugewandten Keilführung (97) gebildeten Spalt (112) hineingezogen wird.

2. Abzugsvorrichtung nach Anspruch 1, dadurch gekennzeichnet, daß die Lagergehäuse (37) der Spannkettenräder (35) in Kulissenführungen (39) des Abzugsgehäuses (31) in Längsrichtung der Rollenketten (19) verschiebbar geführt sind.

3. Abzugsvorrichtung nach Anspruch 1 oder 2, dadurch gekennzeichnet, daß die Spannkraft des wenigstens einen Spannelementes (41) einstellbar ist.

4. Abzugsvorrichtung nach einem der Ansprüche 1 bis 3, dadurch gekennzeichnet, daß das wenigstens eine Spannelement (41) über eine Übertragungsbrücke (63) auf die Druckbolzen (71) wirkt.

5. Abzugsvorrichtung nach einem der Ansprüche 1 bis 4, dadurch gekennzeichnet, daß sich wenigstens zwei Spannelemente (41) mit ihren den Lagergehäusen (37) zugewandten Enden (42) an einer Stützbrücke (55) abstützen.

6. Abzugsvorrichtung nach einem der Ansprüche 1 bis 5, dadurch gekennzeichnet, daß das auf einen Keil (99) wirkende Zugelement (110) als Zugfeder ausgebildet ist.

7. Abzugsvorrichtung nach einem der Ansprüche 1 bis 6, dadurch gekennzeichnet, daß zumindest ein mit einem Lagergehäuse (37) eines Spannkettenrades (35) zusammenwirkender Näherungsschalter (114) vorgesehen ist.

8. Abzugsvorrichtung nach einem der Ansprüche 1 bis 7, dadurch gekennzeichnet, daß das wenigstens eine Spannelement (41) als Druckfeder ausgebildet ist.

9. Abzugsvorrichtung nach einem der Ansprüche 1 bis 7, dadurch gekennzeichnet, daß das wenigstens eine Spannelement (41) als Zugfeder ausgebildet ist.

10. Abzugsvorrichtung nach einem der Ansprüche 1 bis 7, dadurch gekennzeichnet, daß das wenigstens eine Spannelement (41) als hydraulisches Element ausgebildet ist.

11. Abzugsvorrichtung nach einem der Ansprüche 1 bis 7, dadurch gekennzeichnet, daß das wenigstens eine Spannelement (41) als pneumatisches Element ausgebildet ist.

## Claims

1. Device for pulling off elongated material (23), in particular for cables or pipes, having a pull-off housing (31), at least two drivable, endless roller chains (19) which run approximately parallel to one another, a plurality of clamping jaws (21), which are mounted on the roller chains (19) and can engage around the elongated material, in each case a fixed driving chain wheel (33) assigned to a roller chain and a tensioning chain wheel (35) which faces away from the driving chain wheel and is arranged opposite it in the longitudinal direction of the roller chain, the tensioning chain wheels (35) being mounted in bearing housings (37) and, together with these bearing housings (37), being displaceable with respect to the respective driving chain wheel (33) in the longitudinal direction of the roller chains (19), characterized in that at least one resilient tensioning element (41) exerts a tension force on the displaceable tensioning chain wheels (35) in a direction away from the driving chain wheels (33) by means of thrust bolts (71) guided parallel to one another, and in that each tensioning chain wheel (35) is assigned a self-locking wedge (99), which is pulled by a pulling element (110) into a gap (112) which faces the driving chain wheel in the longitudinal direction of the roller chains (19) and is formed between the respective tensioning chain wheel (35) with its bearing housing (37) and a fixed wedge guide (97) facing the tensioning chain wheel (35).

2. Pull-off device according to Claim 1, characterized in that the bearing housings (37) of the tensioning chain wheels (35) are displaceably guided in connecting link guides (39) of the pull-off housing (31) in the longitudinal direction of the roller chains (19).

3. Pull-off device according to Claim 1 or 2, characterized in that the tensioning force of the at least one tensioning element (41) is adjustable.

4. Pull-off device according to one of Claims 1 to 3, characterized in that the at least one tensioning element (41) acts on the thrust bolts (71) via a transmission bridge (63).

5. Pull-off device according to one of Claims 1 to 4, characterized in that at least two tensioning elements (41) are supported on the support bridge (55) by their ends (42) which face the bearing housings (37).

6. Pull-off device according to one of Claims 1 to 5, characterized in that the pulling element (110) acting on a wedge (99) is designed as a tension spring.

7. Pull-off device according to one of Claims 1 to 6, characterized in that at least one proximity switch (114) interacting with a bearing housing (37) of a tensioning chain wheel (35) is provided.

8. Pull-off device according to one of Claims 1 to 7, characterized in that the at least one tensioning element (41) is designed as a compression spring.

9. Pull-off device according to one of Claims 1 to 7, characterized in that the at least one tensioning element (41) is designed as a tension spring.

10. Pull-off device according to one of Claims 1 to 7, characterized in that the at least one tensioning element (41) is designed as a hydraulic element.

11. Pull-off device according to one of Claims 1 to 7, characterized in that the at least one tensioning element (41) is designed as a pneumatic element.

## Revendications

1. Dispositif d'étirage pour matériau allongé (23), en particulier pour des câbles ou des tubes, comportant un boîtier d'étirage (31), des chaînes à rouleaux (19) sans fin entraînables et s'étendant l'une par rapport à l'autre au moins sensiblement parallèlement, une pluralité de pinces de serrage (21) qui sont montées sur les chaînes à rouleaux (19) et avec lesquelles le matériau allongé peut être saisi, à chaque fois un barbotin d'entraînement (33) fixe et un barbotin de tension (35) opposé au barbotin d'entraînement et disposé de façon opposée dans la direction longitudinale de la chaîne à rouleaux pour chaque chaîne à rouleaux, les barbotins de tension (35) étant placés dans des paliers (37) et mobiles suivant la direction longitudinale des chaînes à rouleaux (19) par rapport au barbotin d'entraînement respectif (33), avec lesdits paliers (37), caractérisé en ce qu'au moins un élément tendeur (41) à ressort exerce, au moyen de boulons de pression (71) guidés parallèlement l'un à l'autre, une force de traction dans le sens opposé aux barbotins d'entraînement (33) sur les barbotins de tension (35) mobiles, et en ce qu'une clavette autobloquante (99) est associée à chaque barbotin de tension (35), ladite clavette étant introduite par un élément de traction (110) dans un interstice (112) orienté suivant la direction longitudinale des chaînes à rouleaux (19) vers le barbotin d'entraînement et formé entre le barbotin de tension respectif (35) avec son palier (37) et un guide de clavette (97) fixe orienté vers le barbotin de tension.

2. Dispositif d'étirage suivant la revendication 1, caractérisé en ce que les paliers (37) des barbotins de tension (35) sont guidés de manière mobile dans les guides à coulisse (39) du boîtier d'étirage (31), suivant la direction longitudinale des chaînes à rouleaux (19).

3. Dispositif d'étirage suivant la revendication 1 ou 2, caractérisé en ce que la force de tension de l'élément tendeur (41) au nombre d'au moins un peut être réglée.

4. Dispositif d'étirage suivant l'une des revendications 1 à 3, caractérisé en ce que l'élément tendeur (41) au nombre d'au moins un agit sur les boulons de pression (71) par l'intermédiaire d'un pont de transmission (63).

5. Dispositif d'étirage suivant l'une des revendications 1 à 4, caractérisé en ce qu'au moins deux éléments tendeurs (41) s'appuient par leurs extrémités (42) orientées vers le palier (37) sur un pont porteur (55).

6. Dispositif d'étirage suivant l'une des revendications 1 à 5, caractérisé en ce que l'élément de traction (110) agissant sur une clavette (99) est réalisé sous la forme d'un ressort de traction.

7. Dispositif d'étirage suivant l'une des revendications 1 à 6, caractérisé en ce qu'au moins un capteur de proximité (114) coopérant avec un palier (37) d'un barbotin de tension (35) est prévu.

8. Dispositif d'étirage suivant l'une des revendications 1 à 7, caractérisé en ce que l'élément tendeur (41) au nombre d'au moins un est réalisé sous la forme d'un ressort de pression.

9. Dispositif d'étirage suivant l'une des revendications 1 à 7, caractérisé en ce que l'élément tendeur (41) au nombre d'au moins un est réalisé sous la forme d'un ressort de traction.

10. Dispositif d'étirage suivant l'une des revendications 1 à 7, caractérisé en ce que l'élément tendeur (41) au nombre d'au moins un est réalisé sous la forme d'un élément hydraulique.

11. Dispositif d'étirage suivant l'une des revendications 1 à 7, caractérisé en ce que l'élément tendeur (41) au nombre d'au moins un est réalisé sous la forme d'un élément pneumatique.
